# EUROPÄISCHE PATENTSCHRIFT

(11) **EP 1 629 336 B1**
(45) Veröffentlichungstag und Bekanntmachung des Hinweises auf die Patenterteilung: **15.02.2012**
(21) Anmeldenummer: 04727538.3
(22) Anmeldetag: 15.04.2004
(51) Int. Cl.: G05D 16/20

(54) **VENTIL**
VALVE
SOUPAPE

(30) Priorität: 04.06.2003 DE 10325177
(43) Veröffentlichungstag der Anmeldung: 01.03.2006
(73) Patentinhaber: Hydac Fluidtechnik GmbH, 66280 Sulzbach/Saar (DE)
(72) Erfinder: HILLESHEIM, Thorsten, 51580 Reichshof-Schemmerhausen (DE); BRUCK, Peter, 66484 Althornbach (DE)
(74) Vertreter: Bartels, Martin Erich Arthur
(86) Internationale Anmeldenummer: PCT/EP2004/003936
(87) Internationale Veröffentlichungsnummer: WO 2004/109419

(56) Entgegenhaltungen:
- EP-A- 0 233 166
- EP-A- 0 701 188
- DE-A- 4 417 293
- US-A- 3 856 047
- US-A- 4 491 153
- US-A- 4 576 200
- US-B1- 6 286 535

## Beschreibung

Die Erfindung betrifft ein Ventil, insbesondere Proportional-Druckregelventil zum Ansteuern von Fluidströmen gemäß der Merkmalsausgestaltung des Oberbegriffes des Patentanspruches 1.

Ein dahingehend gattungsgemäßes Ventil in Form eines Proportional-Druckregelventils ist durch die US-6,286,535 B1 bekannt. Bei dieser bekannten Lösung mündet der Pumpenanschluß P in axialer Verschieberichtung des Regelkolbens innerhalb des Ventilgehäuses in dieses ein, und die beiden weiteren Anschlüsse in Form eines Nutzanschlusses A und eines Tankanschlusses T münden quer dazu in radialer Richtung, bei entsprechender Verschiebestellung des Regelkolbens in einen Ringraum, der auf der einen Seite von dem Ventilgehäuse und auf der anderen Seite von dem Regelkolben selbst begrenzt ist. Des weiteren ist bei der bekannten Lösung eine Dämpfungsblende im Regelkolben vorgesehen, die eine Dämpfungskammer zwischen Ventilgehäuse und Regelkolben permanent mit dem genannten Ringraum verbindet. Auf diese Art und Weise lassen sich entsprechend die Einschwingvorgänge des Regelkolbens dämpfen, bei dennoch gleichzeitig hoher Dynamik für das Gesamtventil, was notwendig ist, wenn dahingehende Proportional-Druckregelventile bevorzugt in Kupplungssystemen Anwendung finden, die beispielsweise zum Verbinden zweier Wellen dienen, beispielsweise der Wellen von Arbeitsmaschinen mit Transmissionswellen.

Des weiteren weist bei der bekannten Lösung der Verbindungskanal in Richtung der Vorsteuerkammer des Vorsteuerventils mit seinem Ventilteil innerhalb des Regelkolbens eine Drossel auf, die auf ihrer der Vorsteuerkammer abgewandten Seite mit einem Filterteil versehen ist zum Herausfiltrieren von Verschmutzungen im Fluidstrom, die ansonsten die genannte Drossel zusetzen und dergestalt blockieren könnten. Der derart gedrosselte Fluidstrom gelangt mit hohem Druck auf ein kugelförmig ausgebildetes Schließ- bzw. Ventilteil des Vorsteuerventils, das von einem üblichen Magnetsystem, insbesondere einem Proportional-Magnetsystem, ansteuerbar ist. Dabei wird der genannte Fluidstrom nach Passieren der Drossel in Verlängerung des Verbindungskanals ungebremst auf das kugelförmige Ventilteil geleitet, das federbelastet entgegen der Wirkung des Magnetsystems in seiner Schließstellung entlang eines Ventilsitzes der Vorsteuerkammer gehalten ist. Der derart direkt auf das Ventilteil gerichtete Fluidstrom übt sehr hohe Strahlkräfte auf das dahingehend kugelförmig ausgebildete Schließelement aus, was zu indifferenten Kraftwirkungen auf die Vorsteuerung führt und in bestimmten Ventilzuständen sind dergestalt Fehlfunktionen nicht ausgeschlossen. Insbesondere bei Verwendung dahingehender Ventile für hydraulisch betätigbare Kupplungen od. dgl., die sicherheitstechnisch erhöhten Anforderungen unterliegen, sind dahingehende Fehlfunktionen aber gerade nicht tolerierbar.

In weiterer Fortgestaltung dieser bekannten gattungsgemäßen Lösung sind darüber hinaus Proportional-Druckregelventile nach der US-5,836,335 bekannt, bei denen der Regelkolben eine Einrichtung aufweist zum Begrenzen von Druckspitzen, wie sie beispielhaft am Nutzanschluß A, an die sich hydraulische Kupplungen anschließen lassen, ohne weiteres auftreten können. Hierzu wird bei einer bevorzugten Ausführungsform des bekannten Ventils in den Regelkolben ein federbelastetes Rückschlagventil eingesetzt, das über den Ringraum, an den der Nutzanschluß A anschließbar ist, bei einem vorgebbaren Druckschwellenwert den fluidführenden Weg freigibt zwischen dem Ringraum und einer Umfassungsnut im Regelkolben, die permanent an den Tankanschluß angeschlossen ist.

Durch die EP 0 701 188 A ist als Ventil ein Druckminderer für ein unter Druck stehendes Fluid bekannt, der in einem Ventilgehäuse einen Einlaßkanal enthält, der ein mit einer Druckfluidquelle verbindbares, stromaufwärts gelegenes Ende und ein stromabwärts gelegenes Ende aufweist, das über eine durch eine Axialbohrung in einem Ventilsitz gebildete Öffnung in einem mit einem Ausgangskreis verbundene Entspannungskammer mündet, wobei die Öffnung durch ein in der Entspannungskammer mittels eines druckempfindlichen Steuerelementes zur Öffnung hin und davon weg verschiebbaren Ventils gezielt verschließbar ist. Um zu verhindern, dass der Fluidstrom mit hohem Druck auf das Schließteil des dahingehend gebildeten Vorsteuerventils gelangen kann, sieht die bekannte Lösung für die Fluidführung eine Art labyrinthartiges Hindernis vor, das das unter Druck stehende Fluid dazu zwingt, mindestens zweimal die Richtung zu wechseln, bevor es das Vorsteuerventil erreicht. Dennoch kann es bei dieser Art von Umlenkung aufgrund von Strahlkräften des Fluidstroms zu indifferenten Kraftwirkungen bei der Vorsteuerung kommen, was zu Fehlfunktionen führen kann.

Ausgehend von diesem Stand der Technik liegt daher der Erfindung die Aufgabe zugrunde, unter Beibehalten der Vorteile der bekannten Lösungen diese dahingehend weiter zu verbessern, dass ein Ventil geschaffen ist, bei dem sichergestellt werden kann, dass es nicht zu Fehlfunktionen, insbesondere bezogen auf das Vorsteuerventil, kommen kann, um dergestalt ein Ventil zu schaffen, das hohen Sicherheitsanforderungen an eine sinnfällige Betätigung Genüge tut, um das dahingehende Ventil, insbesondere in hydraulischen Kupplungssystemen, verwenden zu können. Eine dahingehende Aufgabe löst ein Ventil, insbesondere Proportional-Druckregelventil, mit den Merkmalen des Patentanspruches 1 in seiner Gesamtheit.

Dadurch, dass gemäß dem kennzeichnenden Teil des Patentanspruches 1 neben der Drossel zusätzlich eine in Richtung der Vorsteuerkammer weisende Führungseinrichtung für den Fluidstrom derart vorhanden ist, dass der in dem Verbindungskanal geführte Fluidstrom in Richtung des Ventilteils von diesem zumindest teilweise abgelenkt ist, dass die Führungseinrichtung mindestens ein Zerstäuber- und/oder Ablenkteil aufweist, und dass das Zerstäuberteil aus einzelnen Zerstäuberdüsen und das Ablenkteil aus mindestens einem Ablenkkanal gebildet sind, der gegenüber dem Verbindungskanal eine vorgebbare Schrägstellung einnimmt, kann der auf das Ventilteil des Vorsteuerventils gerichtete Fluidstrom derart abgelenkt und/oder zerstäubt werden, dass die Strahlkräfte nicht mehr direkt auf das Schließelement der Vorsteuerung treffen, so dass indifferente Kraftwirkungen auf die Vorsteuerung vermieden und Fehlfunktionen derart sicher ausgeschlossen werden können, und zwar in jedem Ventilzustand.

Über die Zerstäuberdüsen läßt sich der über den Verbindungskanal und die Blende zugeführte Fluidstrom feinst in Richtung des Ventilteils des Vorsteuerventils verteilen, so dass dergestalt die angesprochenen Strahlkräfte auf das Ventil deutlich reduziert sind. Zusätzlich oder alternativ ist darüber hinaus der fluidführende Ablenkkanal in Schrägstellung vorgegehen, der den Fluidstrom in einer Art Drallführung in Richtung der Vorsteuerkammer leitet, so dass auch dergestalt nur indirekt die Strahlkräfte in Berührung mit dem Ventilteil des Vorsteuerventils kommen.

Bei einer bevorzugten Ausführungsform des erfindungsgemäßen Ventils ist die Drossel als Blende ausgebildet.

Bei einer weiteren bevorzugten Ausführungsform des erfindungsgemäßen Ventils sind die Drossel, insbesondere in Form der Blende, und die Führungseinrichtung zwei Bauteile, die voneinander getrennt in dem Verbindungskanal festlegbar sind. Auf diese Art und Weise ist es möglich, die Führungseinrichtung zur Fluidstrahllenkung gegen eine andere Führungseinrichtung zu tauschen, um dergestalt das Ventil auf unterschiedliche Pumpendruckbereiche (Primärdrücke) optimal anpassen zu können. Vorzugsweise ist dabei die Führungseinrichtung insbesondere mit dem jeweiligen Zerstäuber- und/oder dem jeweiligen Ablenkteil mit einer weiteren Drossel, insbesondere in Form einer weiteren Blende, versehen, so dass dergestalt die Führungseinrichtung eine sog. Diffusorblende ausbildet, wobei der Diffusoranteil berechnungstechnisch als Stück eines Strömungskanals angesehen werden kann, dessen Strömungsquerschnitt sich allmählich erweitert, so dass die vom engen zum weiten Querschnitt erfolgende Strömung eine Geschwindigkeitsverminderung bei gleichzeitigem Druckanstieg erfährt, d.h. die Strahlgeschwindigkeit wird in Druck umgesetzt, wobei im Hinblick auf die angesprochene Zerstäubung oder Strahlführung dies nicht zu schädlichen Strahldrücken am Ventilteil selbst führt, sondern vielmehr nur die Einströmverhältnisse im Bereich der Vorsteuerkammer des Vorsteuerventils deutlich verbessert.

Weitere vorteilhafte Ausgestaltungen des erfindungsgemäßen Ventils, insbesondere Proportional-Druckregelventils, sind Gegenstand der sonstigen Unteransprüche.

Im folgenden wird das erfindungsgemäße Ventil anhand eines Proportional-Druckregelventils gemäß eines Ausführungsbeispiels nach der Zeichnung näher erläutert. Dabei zeigen in prinzipieller und nicht maßstäblicher Darstellung die
- Fig.1: teilweise in Ansicht, teilweise im Längsschnitt, das erfindungsgemäße Proportional-Druckregelventil in einer Schalt- bzw. Betätigungsstellung, wobei das Ventil in der Art einer Einschraubpatrone mit seinem Ventilgehäuse in ein Aufnahmegehäuse mit den einzelnen Ventilanschlüssen A, P und T angeschlossen ist;
- Fig.2: in vergrößerter Schnittdarstellung die Vorsteuerkammer mit einem Teil des Ventilteils und der in Fluidstromrichtung vorgeschalteten Kombination von der als Blende ausgebildeten Drossel mit Diffusorblende und vorgeschaitetem Filterteil;
- Fig.3: teilweise in perspektivischer Ansicht, teilweise in Durchsicht, die Diffusorblende nach der Fig.2 von der Unterseite her betrachtet.

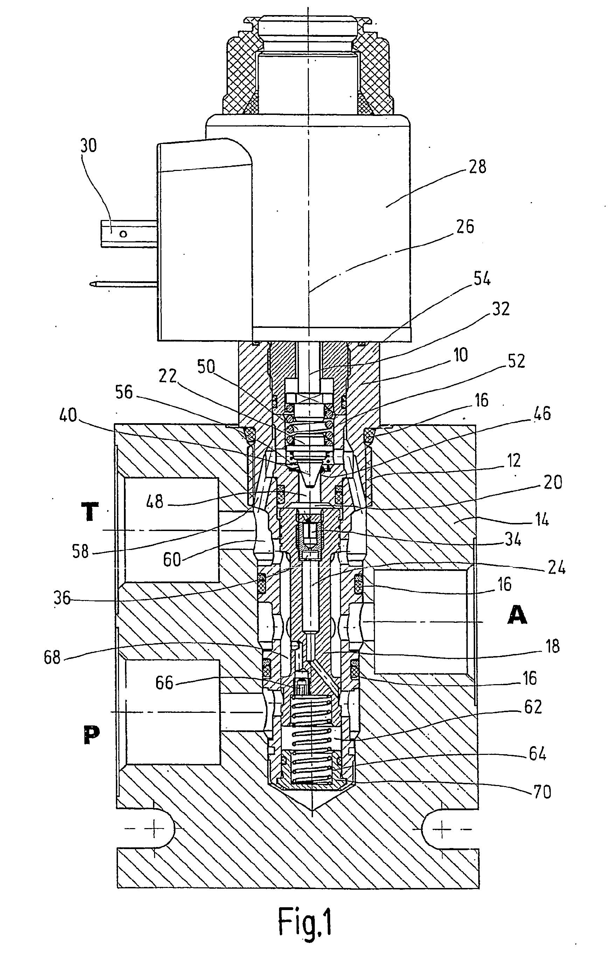

Das erfindungsgemäße Ventil in Form eines Proportional-Druckregelventils ist von seinem wesentlichen Aufbau her in der Fig.1 dargestellt. Es weist in der Art einer Einschraubpatrone ausgebildet ein Ventilgehäuse 10 auf, das sich dergestalt über eine Einschraubstrecke 12 in ein Maschinenteil, beispielsweise in Form eines Ventilblockes 14 od. dgl., einschrauben läßt. Für die dahingehende Verbindung ist das Ventilgehäuse 10 außenumfangsseitig mit entsprechenden Dichtringen 16 nebst zugehörigen Aufnahmen für das Dichtsystem versehen. Das Ventilgehäuse 10 weist in radialer Umfangsrichtung, und zwar in Blickrichtung auf die Fig.1 gesehen, von oben nach unten einen Tankanschluß T, einen Nutzanschluß A sowie einen Pumpenanschluß P für eine nicht näher dargestellte Hydropumpe auf. Des weiteren ist innerhalb des Ventilgehäuses 10 zum wahlweisen Verbinden des Pumpenanschlusses P mit dem Nutzanschluß A sowie des Nutzanschlusses A mit dem Tankanschluß T ein Regelkolben 18 längsverfahrbar geführt.

Zum Herstellen einer fluidführenden Verbindung zwischen dem Pumpenanschluß P und einer Vorsteuerkammer 20 eines als Ganzes mit 22 bezeichneten Vorsteuerventils, ist der Regelkolben 18 mit einem Verbindungskanal 24 versehen, der in Längsrichtung 26 des gesamten Ventils mittig den Regelkolben 18 durchgreift, wobei der Verbindungskanal 24 an seinem in Blickrichtung auf die Fig.1 gesehen unteren Ende querverlaufend abgekröpft ist und dergestalt zum Pumpenanschluß P führt. Des weiteren ist das genannte Vorsteuerventil 22 über ein als Ganzes mit 28 bezeichnetes Magnetsystem, insbesondere in Form eines Proportional-Magnetsystems, ansteuerbar. Dahingehende Magnetsysteme 28 weisen regelmäßig eine zu bestromende Spulenwicklung (nicht dargestellt) auf, wobei hierfür das Magnetsystem 28 über ein Steckeranschlußteil 30 verfügt. Ist das Proportional-Magnetsystem 28 über sein Steckeranschlußteil 30 bestromt, wird über die nicht näher dargestellte Spulenwicklung ein Betätigungsstößel 32 dergestalt angesteuert, dass er in Blickrichtung auf die Fig.1 gesehen eine Bewegungsrichtung nach unten hin aufweist und so das eigentliche Vorsteuerventil 22 gemäß der Darstellung nach der Fig.1 in seiner geschlossenen Stellung hält. Der dahingehende Aufbau eines Magnetsystems 28 in seiner Wirkungsweise ist im Stand der Technik bekannt, so dass an dieser Stelle hierauf nicht mehr näher im einzelnen eingegangen wird.

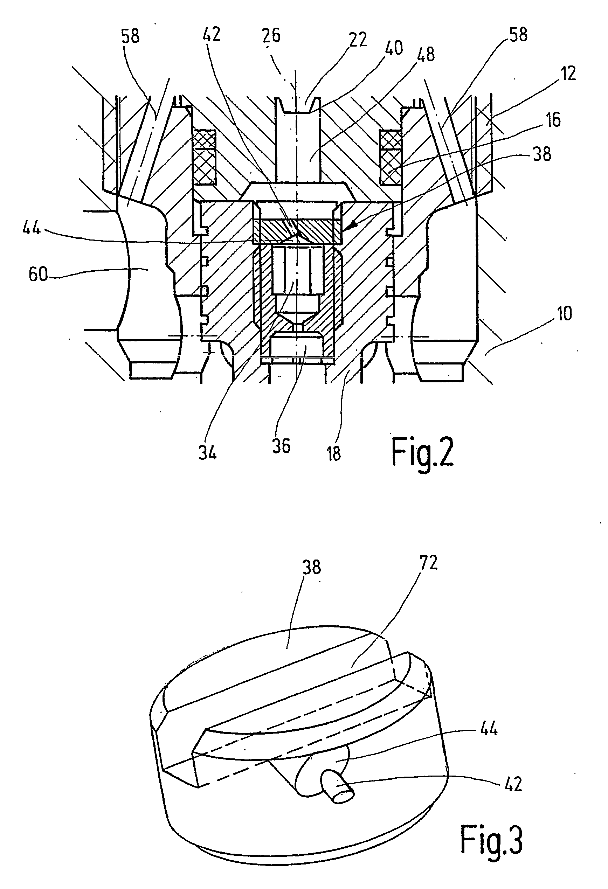

In Richtung der Vorsteuerkammer 20 des Vorsteuerventils 22 weist der Verbindungskanal 24 eine Drossel in Form einer Blende 34 auf (vgl. auch vergrößerte Darstellung in der Fig.2). Eine dahingehende Blende 34 stellt einen örtlichen Strömungswiderstand dar mit regelmäßig sprungartiger Querschnittsverengung, bei dem das Verhältnis der Länge der Blende zu ihrem Durchmesser verhältnismäßig klein gewählt ist (beispielsweise ca. 1,5). Der engste Strömungsquerschnitt liegt dabei regelmäßig außerhalb der geometrischen Querschnittsverengung und da in derartigen Strömungswiderständen die viskose Flüssigkeitsreibung sehr gering ist, ist der Volumenstrom von der Druckdifferenz, nicht aber von der Viskosität des Fluidstromes abhängig.

Der Blende 34 ist in Fluidströmungsrichtung ein Filterteil 36, beilspielsweise in Form eines Schutzsiebes, vorgeschaltet, um dergestalt Verunreinigungen aus dem Fluidstrom herauszufiltern und um so die nachfolgende Blende 34 vor dem Zusetzen durch die Verschmutzungen zu bewahren. In Fluidstromrichtung nachfolgend ist zu der Blende 34 eine Fluid-Führungseinrichtung 38 (vgl. Fig.2) nachgeschaltet, die dazu dient, den gerichteten Fluidstrom, der aus der Blende 34 in Richtung der Vorsteuerkammer 20 auströmt, abzulenken, damit dieser nicht direkt auf das Schließ- oder Ventilteil 40 des Vorsteuerventils 22 trifft, was ansonsten im Stand der Technik bei bestimmten Ventilzuständen zu Fehlfunktionen geführt hat. Die Führungseinrichtung 38 kann mit Zerstäuberdüsen versehen sein, die sicherstellen, dass der eingebrachte Fluidstrom dergestalt vernebelt oder zerstrahlt wird, dass es zu einer gleichmäßigen homogenen Verteilung des Fluids in der Vorsteuerkammer 20 kommt, mit der Folge, dass etwaige Strahlkräfte auf das Ventilteil 40 weitestgehend vermieden sind. Zusätzlich oder alternativ zu den genannten Zerstäuberdüsen kann die Führungseinrichtung 38 auch mit einem Ablenkteil in der Art eines Ablenkkanals 42 versehen sein gemäß den Darstellungen in den Figuren 2 und 3 nach dem gezeigten Ausführungsbeispiel. Der dahingehende Ablenkkanal 42 ist gegenüber dem Verbindungskanal 24 und der Längsausrichtung 26 des Gesamtventils mit einer vorgebbaren Neigung, beispielsweise mit einem Winkel zwischen 10° bis 30°, schräg gestellt mit der Folge, dass der über den Verbindungskanal 24 eingebrachte Fluidstrom in der Art einer Drallführung in die Vorsteuerkammer 20 gelangt und dergestalt in einer seitlichen Wegführung und radial um das konisch zulaufende Ventilteil 40 herumgeführt der Fluidstrom in Kontakt mit demselben gelangt. Auch dergestalt läßt sich wirksam die Fluidstromkraft auf das Ventilteil 40 in jeder seiner Schaltstellungen reduzieren. Als besonders vorteilhaft hat es sich erwiesen, gemäß der Darstellung nach der Fig.3 in Fluidrichtung vor dem schräggestellten Ablenkkanal 42 eine weitere Drossei in Form einer weiteren Blende 44 vorzusehen, die strömungstechnisch besonders dann günstig eine Rolle spielt, wenn das Proportional-Druckregelventil für hohe Pumpendrücke (Primärdrücke) einzusetzen ist. Des weiteren besteht die Möglichkeit, durch Austausch dieses Bauteils gegen einen Diffusor mit einem anderen Blendendurchmesser das Ventil an unterschiedliche Pumpendruckbereiche anzupassen, so dass dergestalt mit einer Ventilkonstruktion sich eine Vielzahl an Anforderungsprofilen abdecken läßt.

Die bereits angesprochene Vorsteuerkammer 20 ist Teil eines im Ventilge-häuse 10 stationär angeordneten Ventilsitzes 46, wobei der Ventilsitz 46 über einen Mittenkanal 48 als fluidführender Bestandteil der Vorsteuerkammer 20 mit dieser verbunden ist. Der dahingehende Ventilsitz 46 ist gemäß der Darstellung nach der Fig.1 in dichtende Anlage bringbar mit dem Ventilteil 40 des Vorsteuerventils 20, wobei das Ventilteil 40 federbelastet in Richtung der Vorsteuerkammer 20 in seine in der Fig.1 gezeigte Schließstellung bringbar ist. Für die Anlage mit dem eigentlichen Ventilsitz 46 ist das Ventilteil 40 an seinem in Blickrichtung auf die Fig.1 gesehen vorderen unteren Ende mit einer konisch zulaufenden Schließ- oder Ventilspitze versehen. Diese ist wiederum einstückiger Bestandteil einer Ventilführungsplatte, an der sich beidseitig je eine Druckfeder 50 abstützt. Die eine Druckfeder 50 erstreckt sich dabei zwischen der genannten Ventilführungsplatte und einer flanschartigen Verbreiterung am unteren Ende des Betätigungsstößels 32, wohingegen die zweite Druckfeder 50, die von ihrer Druckkraft her schwächer ausgeführt ist als die erste Druckfeder, sich mit ihren beiden freien Enden zwischen der Ventilführungsplatte und der Oberseite des Ventilsitzes 46 erstreckt. Zur besseren Führung der genannten Druckfedern 50 kann die Ventilführungsplatte, wie in der Fig.1 gezeigt, beidseitig mit einem zylindrischen Führungs- oder Anlageaufsatz versehen sein.

Für die Führung der Ventilführungsplatte ist innerhalb des Ventilgehäuses 10 ein Führungsteil 52 vorgesehen, das in der Art einer zylindrischen Hülse ausgebildet mit dem Ventilgehäuse 10 fest verbunden ist. Zwischen Führungsteil 52 und dem eigentlichen Magnetsystem 28 ist ein Einschraubteil 54 desselben vorhanden, mit dem sich das Proportional-Magnetsystem 28 an das Ventilgehäuse 10 anbringen und dergestalt festlegen läßt. Des weiteren ist in dem dahingehenden Einschraubteil 54 der Betätigungsstößel 32 mit seiner flanschartigen Verbreiterung an seinem einen freien Ende geführt. Des weiteren begrenzt das Führungsteil 52 mit dem stationär angeordneten Ventilsitz 46 einen Verteilraum 56, der in der Art eines Ringkanals ausgeführt ist. An diesem Verteilraum 56 ist ein fluidführender Weg 58, der im Ventilgehäuse 10 geführt ist, permanent angeschlossen, der im übrigen mit seinem anderen freien Ende in einen Verbindungsraum 60 mündet, der begrenzt ist von dem Außenumfang des Ventilgehäuses 10 und dem Innenumfang des Ventilblockes 14, in welches das Ventilgehäuse 10 einsetzbar ist und in welches der Tankanschluß T im Ventilblock 14 mündet.

Dergestalt ist also eine Verbindung zwischen Tankanschluß T und dem Verteilraum 56 über den fluidführenden Weg 58 erreicht. Der fluidführende Weg 58 kann dabei gemäß der Darstellung nach der Fig.1 aus einer Vielzahl von Einzelkanälen gebildet sein, die konisch in Richtung zum Betätigungsstößel 32 hin zulaufen und das Ventilgehäuse 10 durchgreifen, und zwar in der Höhe seiner Einschraubstrecke 12. Das in Richtung des Tankanschlusses T jeweils weisende Ende der genannten Einzelkanäle tritt dabei in Blickrichtung auf die Fig.1 gesehen unterhalb des unteren Endes der Einschraubstrecke 12 ins Freie bzw. in den Verbindungsraum 60. Aufgrund dieses konstruktiven Aufbaues des Vorsteuerventils 22, wie vorstehend beschrieben, ist dieses mithin in der Art eines Proportionai-Druckbegrenzungsventils ausgebildet.

Wie des weiteren die Fig. zeigt, begrenzt der Regelkolben 18 mit dem Ventilgehäuse 10 an seinem einen, der Vorsteuerkammer 20 abgekehrten Ende, eine Dämpfungskammer 62. In dieser Dämpfungskammer 62 ist ein Kraftspeicher, insbesondere in Form eine Druckfeder 64, angeordnet, die den Regelkolben 18 in Richtung der Vorsteuerkammer 20 zu verschrieben sucht. Die Dämpfungskammer 62 ist über eine im Regelkolben 18 angeordnete Dämpfungsbiende 66 mit einem den Regeikoiben 18 umgebenden Ringraum 68 verbunden, der nach außen hin von der Innenseite des Ventilgehäuses 10 begrenzt ist. In Abhängigkeit von der Längs- oder Verschiebeposition des Regelkolbens 18 im Ventilgehäuse 10 verbindet dieser Ringraum 66 wahlweise den Tankanschluß T mit dem Nutzanschluß A oder den Nutzanschluß A mit dem Pumpenanschluß P. Die Dämpfungskammer 62 ist sowohl von der Innenseite des Ventilgehäuses 10 umfaßt sowie an ihrer einen Seite an dem Regelkolben 18 begrenzt und an ihrer gegenüberliegenden Seite von einem Hubanschlag 70 für den Regelkolben 18. Der eigentliche Hubanschlag 70 wird dabei durch die eine freie Seite, die dem Regelkolben 18 zugewandt ist, gebildet und im übrigen bildet der dahingehende Hubanschlag 70 den Abschluß des Ventilgehäuses 10 an seiner einen Seite gegenüber dem Ventilblock 14.

Nachdem nunmehr der konstruktive Aufbau des erfindungsgemäßen Proportional-Druckregelventils von seinen wesentliche Grundzügen her beschrieben ist, wird im folgenden des besseren Verständnisses wegen der funktionelle Ablauf näher erläutert.

Bleibt das Proportionai-Magnetsystem 28 unbestromt, kann vom Pumpenanschluß P Hydraulikmedium (Öl) zum Tankanschluß T fließen. Bei dem dahingehenden Ventilzustand ist mithin das Vorsteuerventil 22 zu öffnen und der Regelkolben 18 ist auf seinen oberen Anschlag gegen die untere Seite des Ventilsitzes 46 gefahren. Bei der dahingehenden Schaltstellung fließt das Öl vom Pumpenanschluß P durch den Regelkolben 18, und zwar über den Verbindungskanal 24, und durch die Kombination Filterteil 36, Blende 34 und Diffusorblende, bestehend aus Blende 44 und Ablenkkanal 42, sowie von dort über das geöffnete Proportional-Druckbegrenzungsventil 22 der Vorsteuerung zum Tank T hin ab. Die Kräfte der zweiten Druckfeder 50 in Verbindung mit dem Pumpendruck über den Mittenkanal 44 genügt entgegen der Wirkung der ersten darüberliegend angeordneten Druckfeder 50, die Ventilführungsplatte mit dem Ventilteil 40 anzuheben. Über den Mittenkanal 48 gelangt dann das Hydraulikmedium in den Verteilraum 56 und von dort über den fluidführenden Weg 58 in den Verbindungsraum 60, der zusammen mit dem Tankanschluß T zum Tank hin führt. Der dahingehende Volumenstrom kann als Vorsteuerölstrom oder Leckage definiert werden.

Bei einer Strombeaufschlagung des Proportional-Magnetsystems 28 durch eine vorgeschaltete Elektronik (nicht dargestellt) geht das Schließ- oder Ventilteil 40 des Vorsteuerventils 22 auf seine Sitzkante des Ventilsitzes 46 und unterbricht dabei den Volumenstrom zwischen dem Pumpenanschluß P und dem Tankanschluß T. Die Vorsteuerkammer 20 füllt sich dann mit dem Hydraulikmedium auf, wodurch der Druck in diese Kammer ansteigt. Dieser anstehende Druck wirkt auf die obere Stirnseite des Regelkolbens 18 ein und bewegt diesen in Richtung des unteren Hubanschlages 70, und zwar gegen die sich komprimierende dritte Druckfeder 64. Der Druck in der Vorsteuerkammer entspricht dann dem eingeregelten Druck.

Wenn der Druck in der Dämpfungskammer 62 geringer als der Druck in der Vorsteuerkammer 20 ist, nimmt der Regelkolben eine Position ein, bei dem der Verbraucheranschluß A mit dem Pumpenanschluß P verbunden ist. Der Druck am Nutzanschluß A wird über die Dämpfungsblende 66 in die Dämpfungskammer 62 gemeldet und wirkt dort auf die Stirnseite des Regelkolbens 18 als Gegenkraft zu dem Druckniveau in der Vorsteuerkammer 20. Wenn der Druck in der Dämpfungskammer 62 den geregelten Druck erreicht hat, wird der Regelkolben 18 derart verschoben, dass die Verbindung zwischen dem Pumpenanschluß P und dem Nutz- oder Verbraucheranschluß A angedrosselt wird. Der Regelkolben 18 verschiebt sich in eine Position, bei der die beiden Kraftniveaus sich im Gleichgewicht zueinander befinden und definieren dergestalt ein Öffnungsfenster zwischen dem Pumpenanschluß P und dem Nutzanschluß A. Es stellt sich mithin ein Druck am Nutzanschluß A ein, der im direkten Zusammenhang zu dem elektrischen Steuersignal des Magnetsystems 28 steht. Durch die Ausregelung des definierten Sekundärdruckes wird ständig ein Ölvolumen über die Dämpfungsblende 66 zwischen der Dämpfungskammer 62 und dem Nutzanschluß A hin- und hergeschoben mit der Folge, dass der Regelvorgang abgedämpft wird, um dergestalt störende Schwingungen während dieses Einregelvorganges zu vermeiden.

Dadurch, dass bei der erfindungsgemäßen Lösung bei geöffnetem Vorsteuerventil 22 dieses den teilweise im Ventilgehäuse geführten fluidführenden Weg freigibt zwischen dem Verbindungskanal 24 und dem Tankanschluß T, der gleichzeitig mit dem Nutzanschluß A fluidführend verbunden ist, ist ein Ventil geschaffen, das dergestalt komplett entlastet werden kann mit der Folge, dass bei Wegnahme des elektronischen Steuersignals am Magnetsystem 28 der über den Regelkolben 18 geregelte Druck am Nutzanschluß A mit Sicherheit den Druckwert von 0 bar einnimmt. Da somit die erfindungsgemäße Lösung darauf verzichtet, gemäß den bekannten Lösungen den Regelkolben (Hauptstufe) mit einer eingespannten Druckfeder auf seine Endlage zurückzuführen, ist sichergestellt, dass insbesondere bei einem Anwendungsfall bei hydraulischen Kupplungen diese vollständig entlastet werden können, so dass die ansonsten in Eingriff befindlichen Kupplungs-oder Lamellenpakete sich sicher voneinander lösen und die Kupplungsverbindung dergestalt freigeben.

Im unbestromten Zustand kann vom Pumpenanschluß P Öl zum Tankanschluß T fließen. Bei diesem Ventilzustand ist das Vorsteuerventil 22 geöffnet und der Regelkolben 18 ist auf seinen oberen Anschlag gefahren, wie dies die Fig.1 zeigt. In diesem Zustand fließt das Öl vom Pumpenanschluß P durch den Regelkolben 18 durch die Filterblendenkombination mit der nachgeschalteten Diffusorblende 42,44 über das geöffnete Proportional-Druckbegrenzungsventil der Vorsteuerung zum Tank T hin ab. Dieser Volumenstrom kann als Vorsteuerölstrom oder Leckage definiert werden. Die Diffusorblende 42,44 dient dazu, den gerichteten Ölstrahl, der aus der Blende 34 strömt, so weit abzulenken und zu zerstäuben, dass die durch den Fluidstrom hervorgerufenen Strahlkräfte nicht direkt auf das Schließelement 40 der Vorsteuerung treffen, so dass dergestalt indifferente Kraft-wirkungen auf die Vorsteuerung mit Sicherheit vermieden sind, ebenso wie hierdurch bedingte Fehlfunktionen bei bestimmten Ventilzuständen.

Durch die Möglichkeit des Austausches dieses Bauteils 42,44 gegen einen Diffusor mit einem anderen Blendendurchmesser (nicht dargestellt) läßt sich das Ventil auf unterschiedliche Pumpendruckbereiche (Primärdrücke) optimal anpassen, so dass mit einem Ventilgehäuse und dem grundsätzlich gleichbleibenden Ventilaufbau sich eine Vielzahl von Anwendungsbereichen abdecken läßt. Wie des weiteren die Fig.3 zeigt, ist die Fluidführungseinrichtung 38 auf ihrer Unterseite von einer querverlaufenden Schlitzführung 72 durchgriffen, die dem Angriff eines nicht näher dargestellten Schraubendrehers dient, um dergestalt die Fluidführungseinrichtung 38 innerhalb einer Einschraubstrecke im Regelkolben festzulegen. Dergestalt läßt sich die Montage des ansonsten zylindrisch gehaltenen Bauteils in den Regelkolben 18 deutlich erleichtern. Mit der Dämpfungsblende 66 ist eine Anpassung an verschiedene Anwendungsfälle durch die Wahl des Blendendurchmessers möglich.

## Patentansprüche

1. Ventil, insbesondere Proportional-Druckregelventil zum Ansteuern von Fluidströmen, mit einem Ventilgehäuse (10), das mindestens drei fluidführende Anschlüsse aufweist, insbesondere in Form eines Pumpen(P)-, eines Nutz(A)- und eines Tank(T)-Anschlusses, wobei innerhalb des Ventilgehäuses (10) zum wahlweisen Verbinden des Pumpenanschlusses (T) mit dem Nutzanschluß (A) sowie des Nutzanschlusses (A) mit dem Tankanschluß (T) ein Regelkolben (18) längsverfahrbar geführt ist, der zum Herstellen einer fluidführenden Verbindung zwischen mindestens einem der Anschlüsse (P) und einer Vorsteuerkammer (20) eines Vorsteuerventils (22) mit einem Verbindungskanal (24) versehen ist, wobei ein Ventilteil (40) des Vorsteuerventils (22) in der Vorsteuerkammer (20) längsverfahrbar geführt ist und wobei in Richtung der Vorsteuerkammer (20) des Vorsteuerventils (22) mit seinem Ventilteil (40) der Verbindungskanal (24) eine Drossel aufweist, **dadurch gekennzeichnet, dass** neben der Drossel zusätzlich eine in Richtung der Vorsteuerkammer (20) weisende Führungseinrichtung (38) für den Fluidstrom derart vorhanden ist, dass der in dem Verbindungskanal (24) geführte Fluidstrom in Richtung des Ventilteils (40) von diesem zumindest teilweise abgelenkt ist, dass die Führungseinrichtung (38) mindestens ein Zerstäuber- und/oder Ablenkteil aufweist, und dass das Zerstäuberteil aus einzelnen Zerstäuberdüsen und das Ablenkteil aus mindestens einem Ablenkkanal (42) gebildet sind, der gegenüber dem Verbindungskanal (24) eine vorgebbare Schrägstellung einnimmt.

2. Ventil nach Anspruch 1, **dadurch gekennzeichnet, dass** die Drossel als Blende (34) ausgebildet ist.

3. Ventil nach Anspruch 1 oder 2, **dadurch gekennzeichnet, dass** die Drossel, insbesondere in Form der Blende (34), und die Führungseinrichtung (38) zwei Bauteile sind, die voneinander getrennt in dem Verbindungskanal (24) festlegbar sind.

4. Ventil nach einem der Ansprüche 1 bis 3, **dadurch gekennzeichnet, dass** die Drossel, insbesondere in Form der Blende (34), an ihrer der Führungseinrichtung (38) gegenüberliegenden Seite ein Filterteil (36) für den Fluidstrom aufweist.

5. Ventil nach einem der Ansprüche 1 bis 4, **dadurch gekennzeichnet, dass** das Zerstäuber- und/oder das Ablenkteil mit einer weiteren Drossel, insbesondere in Form einer weiteren Blende (44), versehen sind.

6. Ventil nach einem der Ansprüche 1 bis 5, **dadurch gekennzeichnet, dass** das Vorsteuerventil (22) von einem Magnetsystem (28), insbesondere einem Proportional-Magnetsystem, ansteuerbar ist.

7. Ventil nach einem der Ansprüche 1 bis 6, **dadurch gekennzeichnet, dass** die Vorsteuerkammer (20) Teil eines im Ventilgehäuse (10) stationär angeordneten Ventilsitzes (46) ist, der fluidführend mit der Vorsteuerkammer (20) verbunden ist, und der in dichtende Anlage mit dem Ventilteil (40) des Vorsteuerventils (22) bringbar ist, das federbelastet in Richtung der Vorsteuerkammer (20) in seine Schließstellung bringbar ist.

8. Ventil nach einem der Ansprüche 1 bis 7, **dadurch gekennzeichnet, dass** alle fluidführenden Anschlüsse (A,P,T) in radialer Richtung das Ventilgehäuse (10) durchgreifen.

## Claims

1. A valve, especially a proportional pressure control valve for controlling fluid flows, comprising a valve housing (10) that has at least three fluid-carrying ports, especially in the form of a pump port (P), a use port (A) and a tank port (T), within the valve housing (10) for optional connection of the pump port (P) to the use port (A) and of the use port (A) to the tank port (T) a control piston (18) being guided so as to be moveable in the longitudinal direction, which control piston is provided with a connecting channel (24) for producing a fluid-carrying connection between at least one of the ports (P) and a pilot chamber (20) of a pilot valve (22), a valve part (40) of the pilot valve (22) being guided so as to be moveable in the longitudinal direction in the pilot chamber (20), and in the direction of the pilot chamber (20) of the pilot valve (22) with its valve part (40) the connecting channel (24) having a throttle, **characterised in that** in addition to the throttle there is also a guiding means (38) which is oriented in the direction of the pilot chamber (20) for the fluid stream so that the fluid stream guided in the connecting channel (24) is deflected at least partly in the direction of the valve part (40) by the latter, that the guiding means (38) has at least one atomizer part and/or deflector part, and that the atomizer part is formed from individual atomizer nozzles and the deflection part is formed from at least one deflection channel (42) which assumes a definable oblique position relative to the connecting channel (24).

2. The valve according to Claim 1, **characterised in that** the throttle is in the form of an orifice (34).

3. The valve according to Claim 1 or 2, **characterised in that** the throttle, especially in the form of the orifice (23), and the guiding means (38) are two components which can be fixed separately from one another in the connecting channel (24).

4. The valve according to any of Claims 1 to 3, **characterised in that** the throttle, especially in the form of the orifice (34), has a filter part (36) for the fluid stream on its side opposite the guiding means (38).

5. The valve according to any of Claims 1 to 4, **characterised in that** the atomizer part and/or the deflection part are provided with a further throttle, especially in the form of a further orifice (44).

6. The valve according to any of Claims 1 to 5, **characterised in that** the pilot valve (22) can be actuated by a magnetic system (28), especially a proportional magnetic system.

7. The valve according to any of Claims 1 to 6, **characterised in that** the pilot chamber (20) is part of a valve seat (46) which is mounted so as to be stationary in the valve housing (10), which valve seat is connected to the pilot chamber (20) to carry fluid, and which can be brought into sealing contact with the valve part (40) of the pilot valve (22) which can be brought into its closed position spring-loaded in the direction of the pilot chamber (20).

8. The valve according to any of Claims 1 to 7, **characterised in that** all of the fluid-carrying ports (A, P, T) extend through the valve housing (10) in the radial direction.

## Revendications

1. Soupape, notamment soupape de réglage de la pression proportionnelle, pour régler des courants de fluide, comprenant un corps (10) de soupape, qui a au moins trois raccords fluidiques, notamment sous la forme d'un raccord (P) de pompe, d.'un raccord (A) utile et d'un raccord (T) de cuve, dans laquelle il est guidé, de manière mobile longitudinalement à l'intérieur du corps (10) de la soupape, pour.la liaison au choix du raccord (P) de pont au raccord (A) utile ainsi que du raccord (A) utile avec le raccord (T) de cuve, un piston (18) de réglage qui, pour ménager une liaison fluidique entre au moins l'un des raccords (P) et une chambre (20) pilote d'une vanne (22) pilote, est pourvu d'un canal (24) de liaison, une partie (40) de la vanne (22) pilote étant guidée de manière mobile longitudinalement dans la chambre (20) pilote et dans laquelle, dans la direction de la chambre (20) pilote de la vanne (22) pilote avec sa partie (40) de la vanne, le canal (44) de liaison a un étranglement, **caractérisée en ce que**, outre l'étranglement, il est prévu supplémentairement pour le courant de fluide un dispositif (38) de conduite tourné dans la direction de la chambre (20) pilote, de manière à ce que le courant de fluide passant dans le canal (24) de liaison soit dévié, au moins en partie, de celui-ci dans la direction de la partie (40) de la vanne, **en ce que** le dispositif (38) de conduite comporte au moins un pulvérisateur et/ou une partie de déviation et **en ce que** la partie formant pulvérisateur est composée de diverses buses de pulvérisateur et **en ce que** la partie de déviation est formée d'au moins un canal (42) de déviation, qui prend une position pouvant être inclinée par rapport au canal (24) de liaison.

2. Soupape suivant la revendication 1, **caractérisée en ce que** l'étranglement est constitué sous la forme d'un diaphragme (34).

3. Soupape suivant la revendication 1 ou 2, **caractérisée en ce que** l'étranglement, notamment sous la forme du diaphragme (34), et le dispositif (38) de conduite sont deux éléments qui peuvent être fixés séparément l'un de l'autre dans le canal (24) de liaison.

4. Soupape suivant l'une des revendications 1, à 3, **caractérisée en ce que** l'étranglement, notamment sous la forme du diaphragme (34), a, du côté opposé au dispositif (38) de conduite, une partie (36) de filtre du courant de fluide.

5. Soupape suivant l'une des revendications 1 à 4, **caractérisée en ce que** la partie de pulvérisateur et/ou la partie de déviation est munie d'un autre étranglement, notamment sous la forme d'un autre diaphragme (44).

6. Soupape suivant l'une des revendications 1 à 5, **caractérisée en ce que** la vanne (22) pilote peut être pilotée par un système (28) magnétique, notamment par un système magnétique proportionnel.

7. Soupape suivant l'une des revendications 1 à 6, **caractérisée en ce que** la chambre (20) pilote fait partie d'un siège (46) de soupape, qui est monté fixe dans le corps (10) de la soupape, qui communique fluidiquement avec la chambre (20) pilote et qui peut être amené en contact étroit avec la partie (40) de la vanne (22) pilote, laquelle, en étant soumise à l'action d'un ressort dans la direction de la chambre (20) pilote, peut être mise dans sa position de fermeture.

8. Soupape suivant l'une des revendications 1 à 7, **caractérisée en ce que** tous les raccords (A, P, T) fluidiques traversent le corps (10) de la soupape dans la direction radiale.
